# EUROPEAN PATENT APPLICATION

(11) **EP 0 894 462 A1**
(43) Date of publication of application: **03.02.1999**
(21) Application number: 98305193.9
(22) Date of filing: 30.06.1998
(51) Int. Cl.: A47J 37/12

(54) **Electrical deep-fryer**

(30) Priority: 28.07.1997 US 901526; 29.05.1998 US 87041
(71) Applicant: Sham, John, Chun, Kuen, Hong Kong (HK); Kunavongvorakul, Kumkit, Thungkru, Ratburana, Bangkok (TH)
(72) Inventor: Sham, John, Chun, Kuen, Hong Kong (HK); Kunavongvorakul, Kumkit, Thungkru, Ratburana, Bangkok (TH)
(74) Representative: Woodward, John Calvin

(57) **Abstract**

The present invention features an electrical, frying appliance that uniformly cooks food items placed within its food basket. The frying appliance (10) automatically immerses and extracts the cooking basket into and out of an aluminium oil bowl containing heated oil. In this fashion, the food in the basket is uniformly fried during the cooking cycle. The frying appliance contains a translationally movable basket (12) that operates by a transmission wire (11) driven by a shaft. The translational movement of the food basket allows the food in it to lie flat as it is immersed in the aluminium oil bowl. The food basket remains substantially horizontal during its movement between its immersed and non-immersed positions. In this fashion, the food items are prevented from shifting around in the frying basket. This allows the food to fry evenly within the basket and, when cycled, to be drained of oil periodically. The shaft mechanism that moves the food basket is directly powered by a motor (3) that is offset from the aluminium oil bowl (14) allowing for a cooler, operational motor temperature.

## Description

The present invention relates to electrical cooking appliances and, more particularly, to an electrical deep-fryer that provides both automatic, cyclic immersion and extraction of the food basket and its contents into and out of heated oil while in an oil bowl. The automatic immersion causes the food basket to rise up and down and stop at an indicated location.

Automatic, oil-frying machines are popular home appliances today. However, many of these oil fryers have been known to cook the contents of their baskets unevenly. Additionally, many fried items retain too much oil and, when removed from the fryer, remain greasy and generally unwholesome.

The present invention reflects the discovery that foods that are periodically immersed and removed from a fryer during the cooking cycle become more evenly cooked, and tend to retain less oil after the cooking cycle is terminated.

United States Patents Nos. 4901633 and 5027697 disclose devices which cyclically move the food in the basket in and out of the heated oil, as the basket is caused to rotate in a tilted position.

Several problems are associated with these known types of basket fryers. In the first place, the rotative drive motor is disposed below the heated oil pan, in close proximity to the heated oil. The motor must be carefully sealed so as to prevent oil leakage into the motor housing. Since it is so close to the oil, the motor must be designed to run hot, yet be sufficiently insulated to prevent overheating of its parts. In addition to these operational problems, the food cooking is often uneven, despite the rotation of the basket into and out of the heated oil. Items such as puff balls, fritters and other, generally round items may tend to roll back into the oil, as the tilted basket is rotated. In addition, some items are disposed within the oil longer, because of their size and/or shape, thus causing an unevenness in the entire, cooked contents of the rotating basket.

The present inventors determined that, in order to provide uniform frying of food items in an electrical deep-fryer, it is advantageous to have the food basket automatically rise up and down and stop in an indicated location. Then the food basket is immersed into the heated oil in a uniform, translational manner. Using translational motion ensures that all of the food items in the basket meet and leave the heated oil at approximately the same time. The translational motion also ensures that none of the items in the food basket will shift during the cooking cycle.

It is an object of the present invention to provide an improved, electrical, frying appliance which automatically immerses and extracts food items from an oil bowl during a cooking cycle.

It is another object of the present invention to provide an electrical fryer that is less subject to fouling than conventional appliances and uniformly cooks foods.

In accordance with a first embodiment of the present invention, there is provided an electrical frying appliance that uniformly cooks food items disposed within its frying basket. The frying appliance cyclically immerses and extracts the cooking basket into and out of a pan containing heated oil. Thus, the food in the inventive basket is more uniformly fried during the cooking cycle than is food in conventional appliances. The frying appliance comprises a translationally moveable basket that operates by a parallel linkage driven by a gear train and worm drive mechanism. The translational movement of the basket allows the food disposed therein to lie flat as it is immersed in the oil. That is, the frying basket remains substantially horizontal during its movement between its immersed and non-immersed positions. In this fashion, the food items are prevented from shifting around the frying basket. This allows the food to fry evenly therewithin and, when cycled, to be periodically drained of oil.

The gear train and worm drive mechanisms that move the basket are both powered by a motor that is offset from the oil pan housing, allowing for a cooler, operational motor temperature. The motor is thus less subject to heated oil vapors and oil leakage that are usually associated with motors disposed at the bottom of the oil pan housing. The gear train and worm drive mechanisms are also offset from the oil pan, and are protected from heated oil vapors by the outside wall thereof. Accordingly, the gear train and worm drives also experience less fouling by grease and oil than do those in a conventional appliance during the lifetime of the frying appliance.

In accordance with another embodiment of the present invention, there is provided an electrical frying appliance that uniformly cooks food items disposed within its food basket. The frying appliance automatically immerses and extracts the food basket into and out of an oil bowl. Thus, the food in the inventive food basket is more uniformly fried during the cooking cycle than food fried in conventional appliances. The frying appliance comprises a translationally movable basket that is supported by a transmission stand that is driven by a shaft connected to a motor. The translational movement of the basket allows the food disposed therein to lie flat as it is immersed in the aluminium oil bowl. That is, the food basket remains substantially horizontal during its movement between its immersed and non-immersed positions. In this fashion, the food items are prevented from shifting around in the food basket. This allows the food to fry evenly therein and, when cycled, to be periodically drains of oil.

The shaft from the motor is directly connected to the food basket that is driven by triggering the power supply of the whole unit which is controlled by a switch. The motor, offset from the oil bowl housing, allows for a cooler, operational motor temperature. The motor is thus less subject to heated oil vapors and oil leakage that is usually associated with motors disposed at the side of the oil bowl housing. The motor of the fryer is offset from the oil bowl, and is protected from heated oil vapors by a retaining wall of the cooking chamber and a shield. Accordingly, the motor of the invention experiences less fouling by grease and oil during its frying lifetime than do comparative conventional frying appliances.

Preferred embodiments of the invention will now be described, by way of example only, with reference to the accompanying drawings, in which:
Figure 1 illustrates a front, sectional view of a first embodiment of electrical, deep-frying appliance of this invention, with its frying basket disposed in its "up", or extracted, position;
Figure 2 depicts a side, internal view of the drive mechanism of the electrical, deep-frying appliance shown in Figure 1, with the drive mechanism positioned for the frying basket in its "up", or extracted, position;
Figure 3 shows the electrical, deep-frying appliance illustrated in Figure 1, with its frying basket disposed in its lower position, immersed in oil;
Figure 4 illustrates the drive mechanism shown in Figure 2 in a position corresponding to the immersion position of the frying basket shown in Figure 3;
Figure 5 depicts the electrical circuit for electrically actuating and operating the deep-frying appliance shown in Figures 1 through 4; and
Figure 6 shows an alternate embodiment for the electrical circuit illustrated in Figure 5;
Figure 7 illustrates a front, sectional view of a second embodiment of electrical, deep-frying appliance of this invention, with its food basket disposed in its "up", or extracted, position;
Figure 8 depicts a side, internal view of the drive mechanism of the electrical, deep-frying appliance shown in Figure 7, with the drive mechanism positioned for the frying basket in its "up", or extracted, position;
Figure 9 shows the electrical, deep-frying appliance illustrated in Figure 7, with its food basket disposed in its lower position, immersed in oil;
Figure 10 illustrates the drive mechanism shown in Figure 8 in a position corresponding to the immersion position of the food basket shown in Figure 3;
Figure 11 depicts the electrical circuit for electrically actuating and operating the deep-frying appliance shown in Figures 7 and 10; and
Figure 12 shows an alternate embodiment for the electrical circuit illustrated in Figure 11.

For purposes of clarity and brevity, like elements and components will bear the same designations and numbers throughout the above Figures.

Generally speaking, the invention provides an electrical, deep-frying appliance that cooks food uniformly. The frying appliance features a translationally movable frying basket, which allows for the cyclical immersion and extraction thereof, along with its food contents, into and out of heated oil. The translational movement of the basket ensures that food disposed therewithin does not shift during the immersion and extraction cycles.

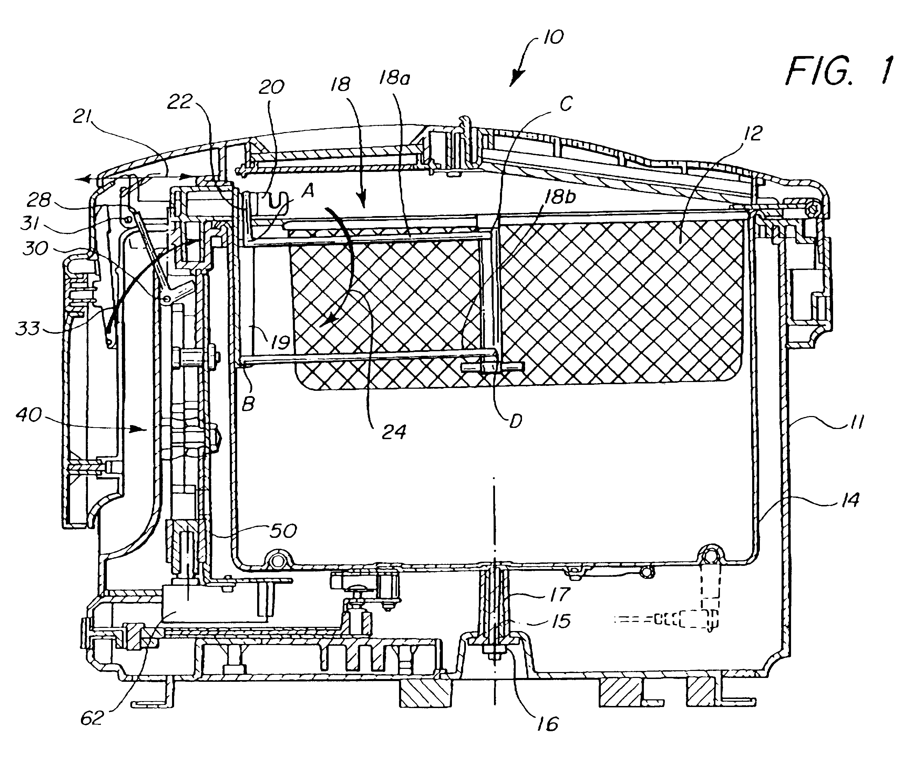

Now referring to Figure 1, an electrical, deep-frying appliance 10 is illustrated. The appliance 10 comprises a fryer housing 11, which contains a frying basket 12. The frying basket 12 is disposed within an oil pan housing 14. The oil pan housing 14 is mounted for rotation upon a spindle 15 that is rotationally anchored to the bottom of the fryer housing 11 by nut 16, through hollow bore 17.

The frying basket 12 is shown in an upper, extracted position with respect to the oil pan 14. The basket 12 is movably supported by a parallel linkage 18, comprising links 18a and 18b that are rotationally anchored to a fixed flange 19 about pivot points A and B, respectively, and rotationally fixed to basket 12 at points C and D, respectively. The upper link 18a of the translational linkage 18 comprises an extension arm 22 anchored to a horizontally movable rod 20. Rod 20 is horizontally slidable in a reciprocal fashion, as shown by arrows 21. The rod 20 is spring-biased (not shown) to the left. The horizontal, reciprocal movement of rod 20 to the right, against its spring biasing, forces the extension arm 22 to pivot about pivot point A, thereby forcing the link 18a to pivot downwardly about pivot point A also, as shown by arrow 24. Link 18b follows the motion of its companion link 18a; it also pivots in direction 24, since the parallel, translational links 18a and 18b of linkage 18 are movably tied together, and act in the well-known sense attributable to this type of linkage.

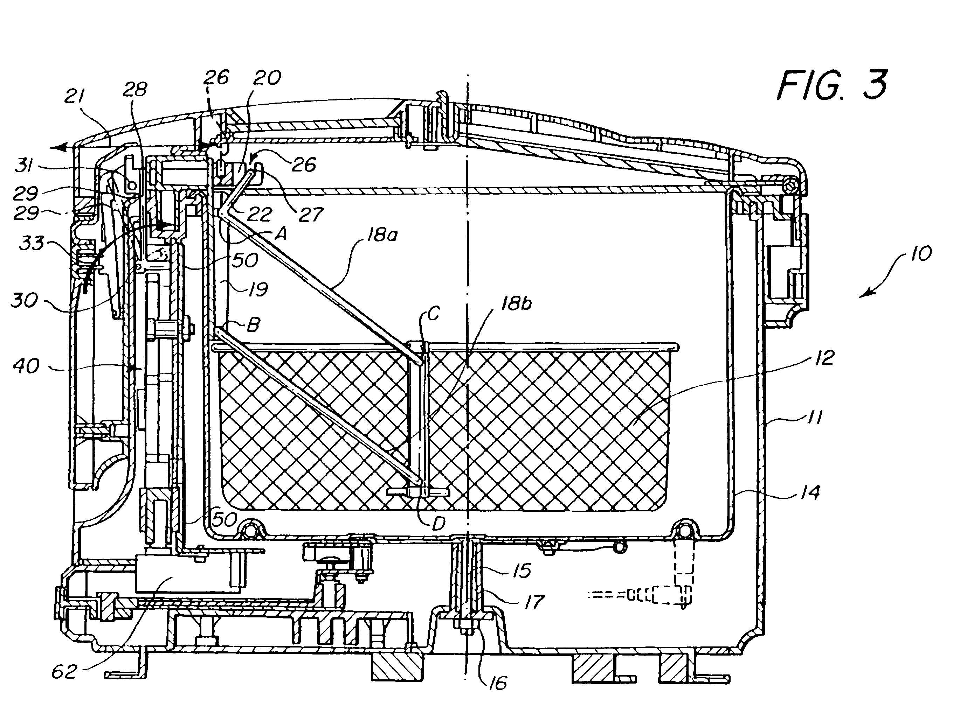

The frying basket 12 is caused to translationally move downwardly within the oil pan housing 14, as linkage 18 pivots about pivot points A and B, in direction 24. Thus, the frying basket 12 is caused to descend into the bottom of the oil pan housing 14 and immerse the food contained within the basket into the heated oil that is disposed in the bottom of the oil pan housing 14, as shown in Figure 3. During movement between its upper, retracted position (Figure 1) and its immersed position (Figure 3), the frying basket 12 remains substantially horizontal, so that food disposed within the basket does not shift.

Referring to Figure 3, the electrical, deep-frying appliance 10 is shown in enlarged detail. Extension arm 22 of link 18a is movable anchored in slot 26 of the slidable rod 20. The end 27 of the extension arm 22 comprises a round pin (not shown) that rides within slot 26 and follows the horizontal motion (arrows 21) of the slidable rod 20. The movement (arrow 21) of the slidably reciprocal rod 20 is imparted to the rod by a pivot link 29 that pivots about pivot point 30. The pivot link is shown in this view in both solid and phantom views. The solid view is its position in Figure 3; the phantom view represents its position in Figure 1. An upper portion 28 of the pivot link 29 rests against a fixed pin 31 that is anchored to the rod 20. The pivot link 29 moves from the angled position (Figure 1) to the nearly vertical position (Figure 3), as shown by arrow 33. The pivotable movement of pivot link 29 in a clockwise direction (arrow 33) causes the rod 20 to move to the right under its spring biasing, and causes the basket 12 to descend into the oil pan housing 14.

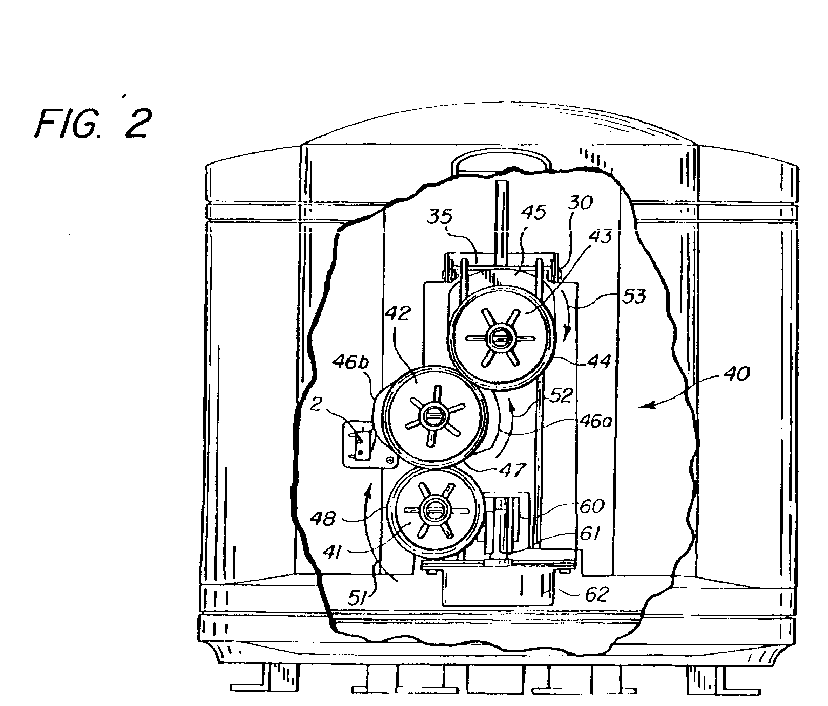

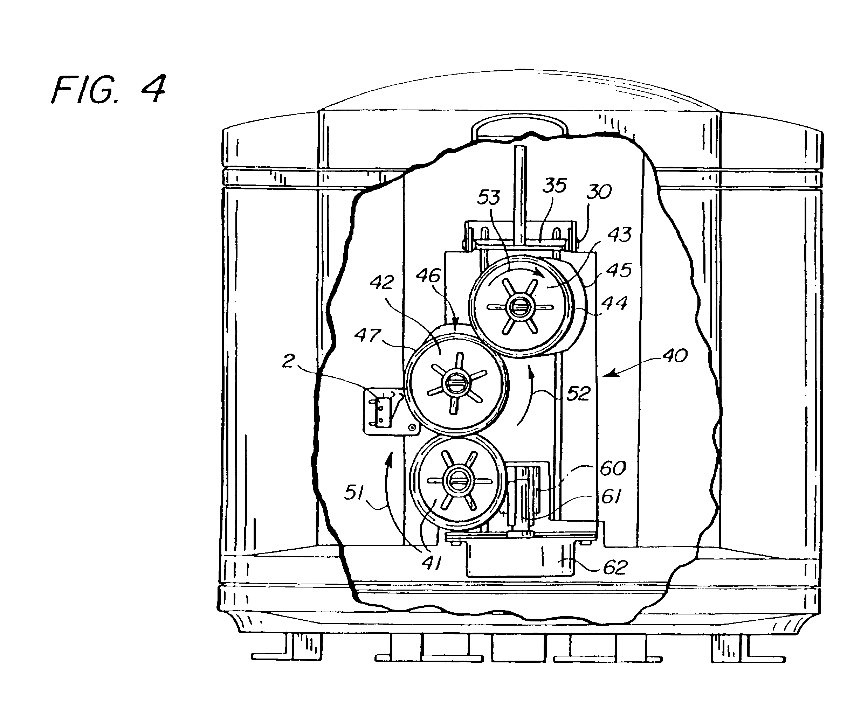

The pivot 30 about which pivot link 29 is caused to rotatively pivot comprises a worm 35, to which the pivot link 29 is fixedly attached, as better observed with reference to Figures 2 and 4.

Referring to Figures 2 and 4, a gear train 40 is depicted that comprises three engaged gears 41, 42 and 43. Figure 2 represents the positions of these gears with respect to the upper basket position, as shown in Figure 1. Figure 4 depicts the gear positions with respect to the lower basket position, as illustrated in Figure 3. As aforementioned, the pivot link 29 that is fixedly attached to worm 35 at pivot point 30 is caused to pivot as the worm 35 is caused to rotate. The worm 35 is rotatively driven by the gear train 40. The worm 35 is in direct, operative contact with the upper gear 43 of the gear train 40. The upper gear 43 is a complex gear having two separate gear surfaces 44 and 45. The surface 45 has teeth which contact the worm 35, rotatively driving it. The worm 35, in turn, rotatively drives the link 29 into the moving rod 20. The surface 44 of gear 43 contains gear teeth that are in meshing engagement with the teeth on the surface 47 of gear 42. Gear 41 has teeth on its meshing surface 48. The teeth of gear 41 mesh with and drive the teeth of gear 42, which, in turn, drives gear 43. The rotative drive direction of each gear is illustrated by arrows 51, 52 and 53, respectively. The lead drive gear 41 of the drive train 40 is driven by a worm 60 that is fixedly attached to the rotative shaft 61 of the drive motor 62.

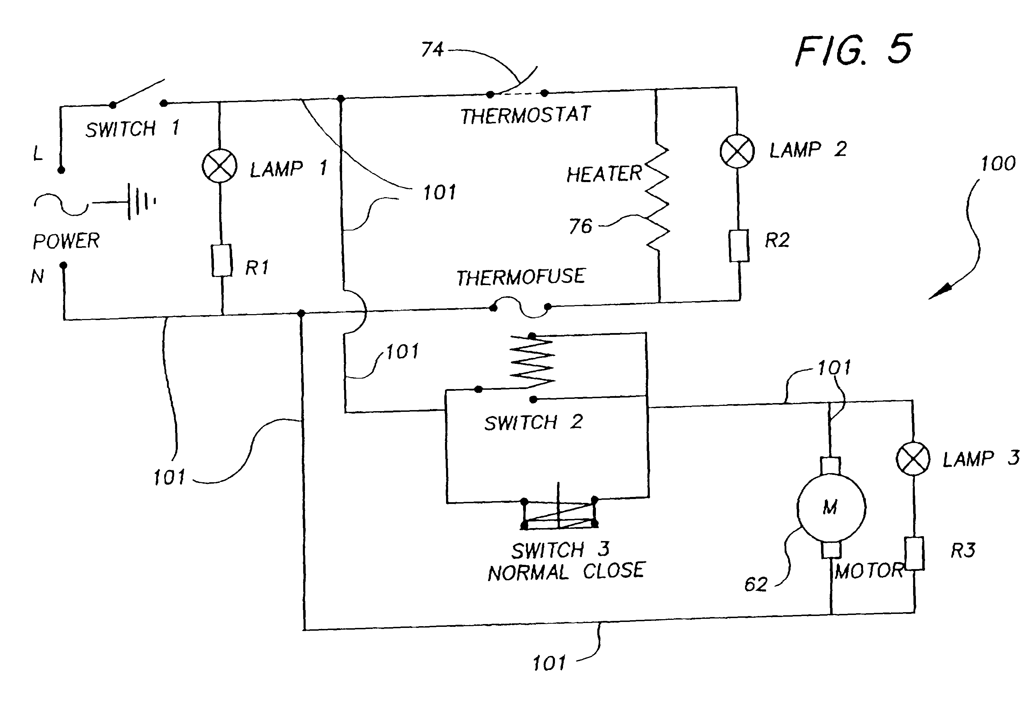

The middle gear 42 of the gear drive train 40 is attached to a cam 46 that periodically comes into contact with switch 2, as gear 42 is caused to turn. Switch 2 is normally open; it is closed by the contact with the rotating cam 46. Switch 2 controls the movement of the basket from the upper, retracted position to its lower, immersed position within the oil pan housing 14. The description of the electrical controls, of which switch 2 is an integral part, is explained further hereinafter with respect to Figure 5.

Referring again to Figures 1 and 3, motor 62 is considerably offset to the left of the oil pan housing 14. The gear train 40 is insulated from the oil pan housing 14 by an insulative wall 50. These two features of the design allow the drive mechanism to run freely, prevent fouling by heated oil vapors, and keep the drive mechanism operatively cool.

Referring to Figure 5, the electrical circuit 100 of the deep-frying appliance 10 of this invention is shown. The circuit 100 allows the frying appliance 10 to operate in several different modes. The fryer appliance 10 can operate in an automatic, cyclic mode, wherein the basket 12 can automatically descend into and rise from the oil pan housing 14. When switch 2 is pushed downwardly, away from its spring biasing, a normally closed switch 3 is bypassed, which causes a short circuit of the sub-circuit 101 of the switch 3 motor control. This causes motor 62 to energize; it begins to operate continuously, thus causing the basket to cycle between its upper and lower positions.

At the beginning of the operative, cooking cycle, the basket may be caused to descend into the oil pan housing 14 by pushing the switch 2 once, upwardly, towards its spring. This single contact energizes the motor 62. The basket is caused to descend. As the gear train 40 continues to rotate, the cam 46 comes into contact with switch 2, thus cutting off the motor actuation and leaving the basket in its lower, immersed position. The second half of cam 46a pushes normally-closed switch 3 to the open position, cutting off the power to motor 62. Lamp 3 lights, showing that the appliance 10 is in a cooking cycle. At the end of the cooking cycle, switch 2 is pushed one more time in the spring direction to actuate the motor 62, thus causing the basket 12 to rise to its non-immersed, upper position. The first half of the cam 46b pushes the normally-closed switch 3 to its open position, thus cutting off power to motor 62.

Switch 1 is pushed to start the cooking cycle and to furnish power to the sub-circuit 101. Lamp 1 lights, indicating that the cooking cycle is active.

Lamp 2 lights when power is furnished to the heater 76, which is used to heat the oil in the oil pan housing 14. The thermostat 74 automatically interrupts the power supplied to the heater 76 when the oil's cooking temperature is reached. When the temperature of the oil falls below cooking temperature, the thermostat re-closes the circuit to the heater 76.

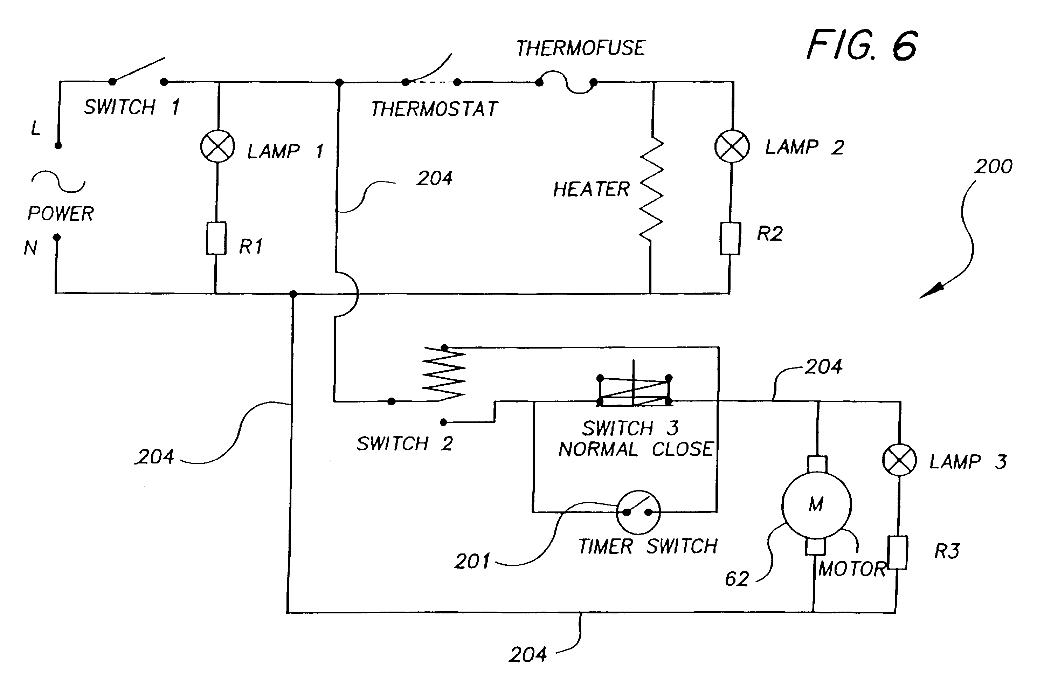

Referring to Figure 6, an alternate embodiment is shown for the circuit 100 illustrated in Figure 5. The alternate circuit 200 allows the deep-fryer basket 12 to cycle between the upper and lower positions continuously. This is accomplished by means of timer switch 201. The user sets the timer switch 201 for a given frying time and then actuates switch 2 to close the circuit 204 feeding power to motor 62. The motor 62 now begins to rotate, causing the basket 12 to rise and fall continuously until the time set for the timer switch 201 runs out. At this point in time, the basket 12 continues to move, because motor 62 continues to receive power through the circuit 204, via the closed path provided by switch 3. However, when the basket 12 reaches the highest position, switch 3 opens circuit 204, and basket movement ceases at the high position. This allows the user to easily remove the food from the basket 12.

As aforementioned, the movement of the basket 12 is indicated by lamp 3. The constant cycling of the basket 12 causes food to fry intermittently during the timed cycle.

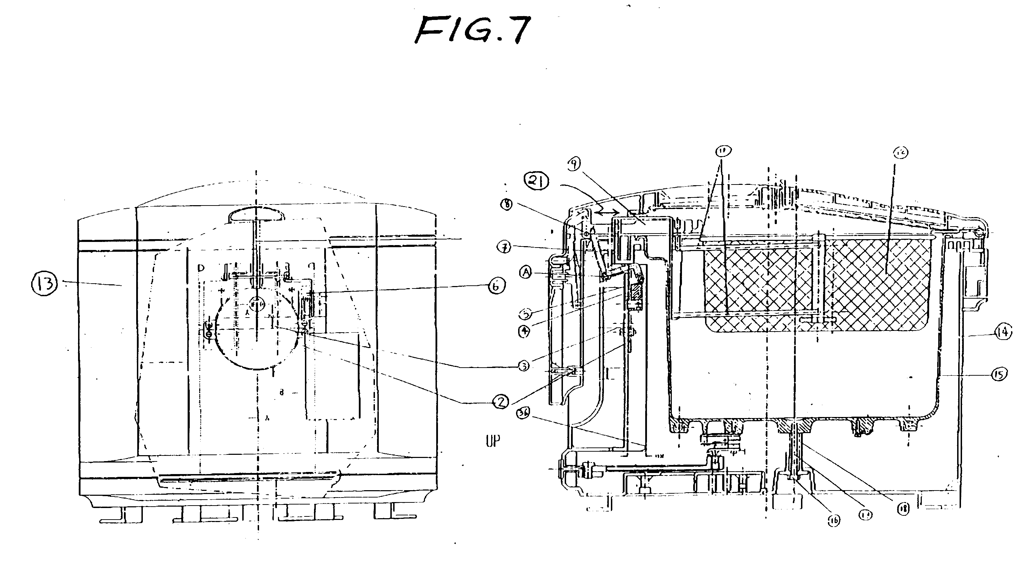

Referring now to Figure 7, an electrical, deep-frying appliance 13 is illustrated. The appliance 13 comprises a fryer housing 14, which contains a food basket 12. The food basket 12 is disposed within an aluminium oil bowl 15. The aluminium oil bowl 15 is mounted for rotation upon a spindle 17 that is rotationally anchored to the bottom of the fryer housing 14 by nut 16, through hollow bore 18.

The food basket 12 is shown in an upper, extracted position with respect to the aluminium oil bowl 15. In operation, when a user turns a switch 2 in a counter-clockwise direction, motor 3 rotates, as indicated by a lamp 3. As the motor 3 rotates, a cam 4 also rotates and a lever 7 swings about lever point A. A gyro wheel 5 slides over the cam 4 to reduce friction during rotation. In order for the food basket 12 to rise up automatically, the cam 4 must rotate to its highest point. Then lever 7 swings to the left and pushes a pin 8 to the left. As a result, a transmission 9 moves to the left and the transmission wire 11, having transmission wires 11a and 11b, rotates counter-clockwise about the lever 7 so the food basket 12 is raised up to its highest point.

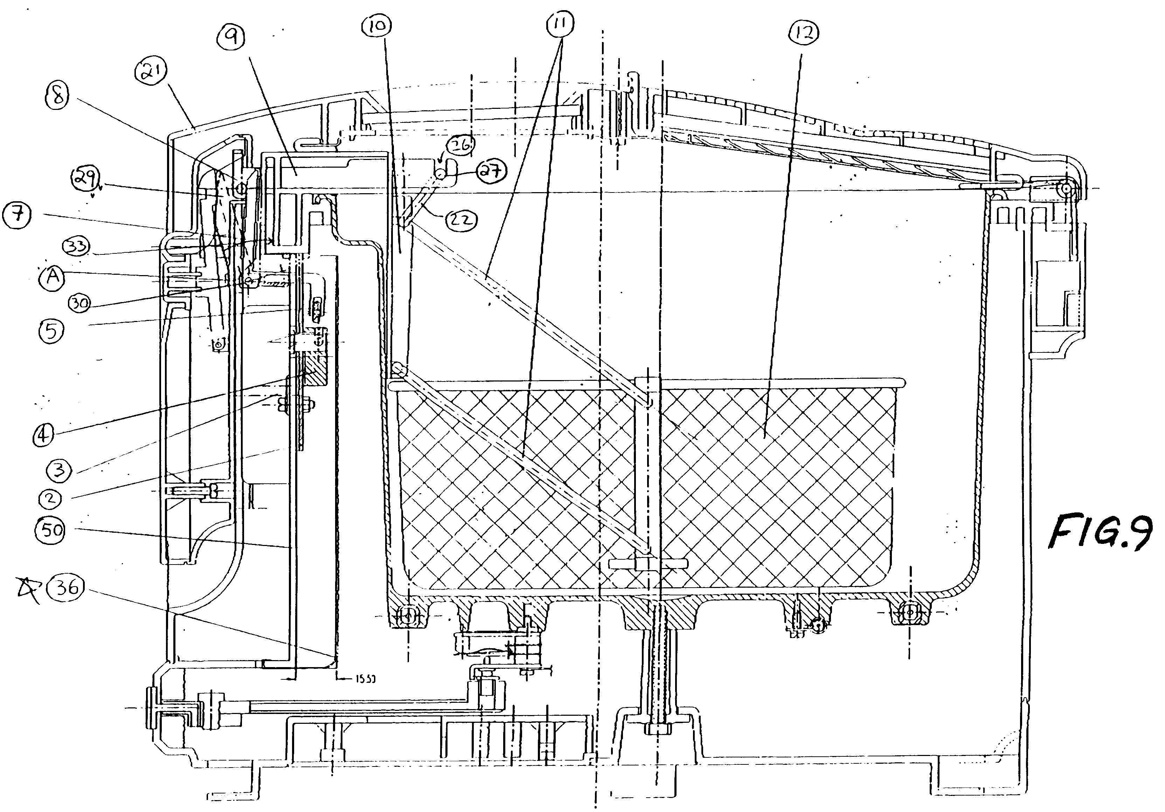

Referring to Figure 9, the electrical, deep-frying appliance 13 is shown in enlarged detail. Extension arm 22 of link 11a is movably anchored in slot 26 of the slidable rod 9. The end 27 of the extension arm 22 comprises a round pin (not shown) that rides within slot 26 and follows the horizontal motion (arrows 21) of the slidable rod 9. The movement (arrow 21) of the slidably reciprocal rod 20 is imparted to the rod by a pivot link 29 that pivots about pivot point 30. The pivot link 29 is shown in this view in both solid and phantom views. The solid view is its position in Figure 9, the phantom view represents its position in Figure 7. An upper portion 28 of the pivot link 29 rests against a fixed pin 8 that is anchored to the rod 9. The pivot link 29 moves from the angled position (Figure 7) to the nearly vertical position (Figure 9), as shown by arrow 33. The pivotable movement of pivot link 29 in a clockwise direction (arrow 33) causes the rod 20 to move to the right under its spring biasing, and causes the food basket 12 to descend into the aluminium oil bowl housing 15.

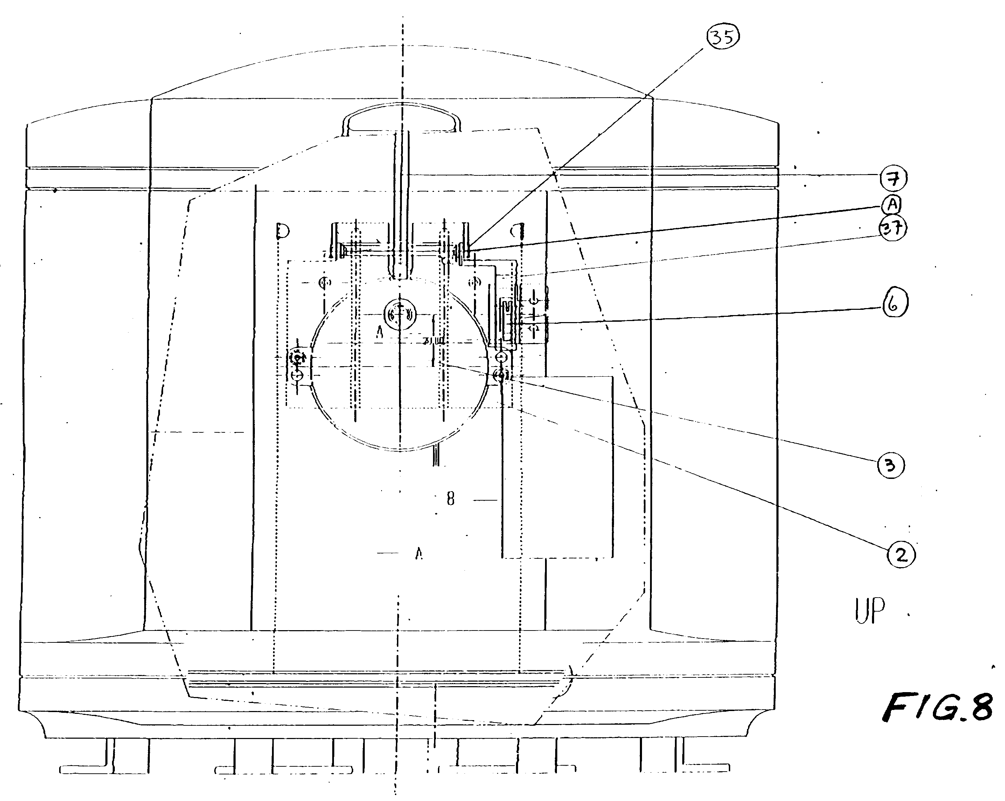

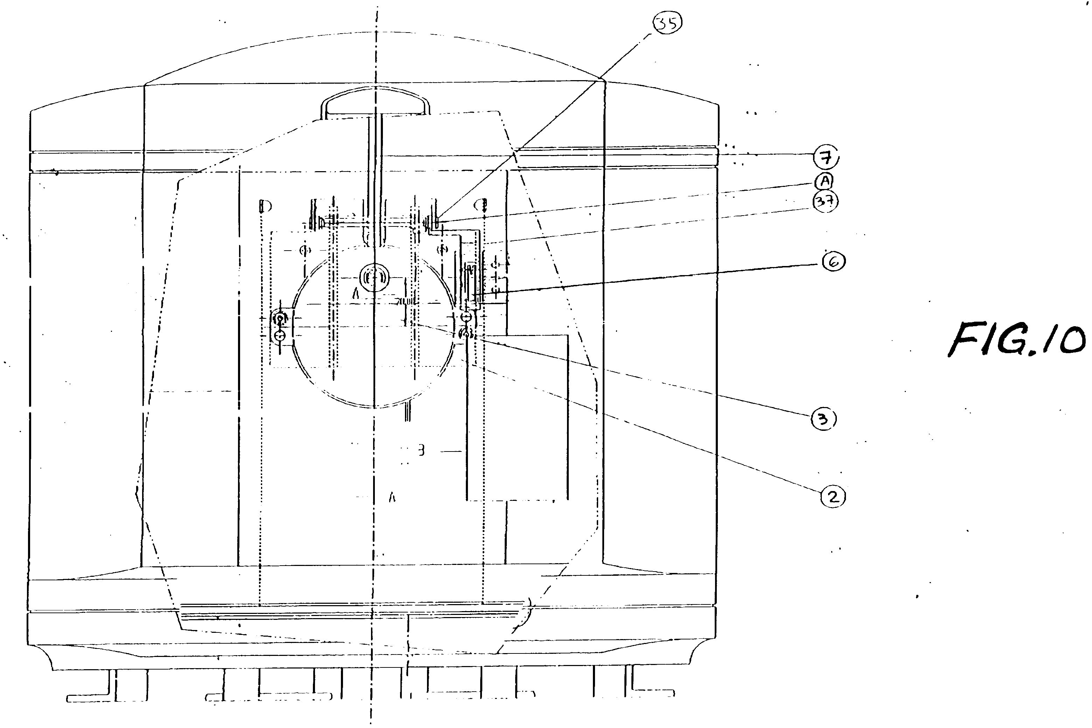

The pivot 30 about which pivot link 29 is caused to rotatively pivot comprises a shaft 35, to which the pivot link 29 is fixedly attached, as better observed with reference to Figures 8 and 10.

Referring to Figures 8 and 10, a shaft 35 is depicted. Figure 2 represents the positions of the shaft 35 with respect to the upper basket position, as shown in Figure 7. Figure 4 depicts the shaft position with respect to the lower basket position, as illustrated in Figure 9. As aforementioned, the pivot link 29 that is fixedly attached to shaft 35 at pivot point 30, is caused to pivot as the shaft 35 is caused to rotate. The shaft 35 is rotatively driven by the motor 3. The shaft 35, in turn, rotatively drives the link 29 into the moving rod 20.

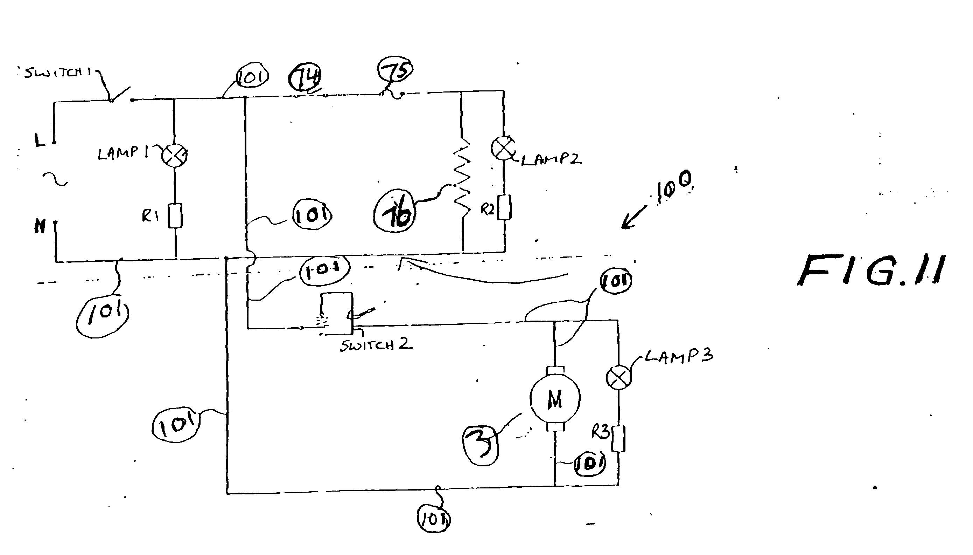

The switch push plate 37 periodically comes into contact with switch 2, as shaft 35 is caused to turn. Switch 2, which is normally open, is closed by the contact with the switch push plate 37 as the cam 4 rotates. Switch 2 controls the movement of the food basket 12 from its upper, retracted position to its lower, immersed position within the aluminium oil bowl housing 15. The description of the electrical controls, of which switch 2 is an integral part, is explained further hereinafter with respect to Figure 11.

Referring again to Figures 7 and 9, motor 3 is considerably offset to the left of the aluminium oil bowl 15. The motor 3 is insulated from the aluminium oil bowl 15 by an insulative retaining wall 50 and an aluminium shield 36. These two features of the design allow the drive mechanism to run freely, to prevent fouling by heated oil vapors, and keep the drive mechanism operatively cool.

Referring to Figure 11, the electrical circuit 100 of the deep-fryer appliance 13 of this invention is shown. The circuit 100 allows the frying appliance 13 to operate in several different modes. The fryer appliance 13 can operate in an automatic, cyclic mode, wherein the food basket 12 can automatically descend into and rise from the oil bowl housing 15. When switch 2 is pushed downwardly, away from its spring biasing, a short circuit of the sub-circuit 101 occurs. This causes motor 3 to energize, and begin to operate continuously, thus causing the food basket 12 to cycle between its upper and lower positions.

At the beginning of the operative, cooking cycle, the food basket 12 may be caused to descend automatically into the aluminium oil bowl housing 15. When cam 4 rotates to the lowest position, lever 7 swings to the right and it pushes the pin 8 to the right. As a result, the transmission 9 moves to the right and transmission wire 11 rotates clockwise about the lever 7. The food basket 12 is moved down to the lowest position. When the food basket 12 reaches the desired position and the knob of the switch 2 is released, the turning knob 28 returns to the OFF position.

Then motor 3 stops. The food basket 12 stops at that position as the turning knob 28 is released.

Switch 1 is pushed to start the cooking cycle and to furnish power to the sub-circuit 101. Lamp 1 lights, indicating that the cooking cycle is initiated.

Lamp 2 lights when power is furnished to the heater 76, which is used to heat the aluminium oil bowl 15. The thermostat 74 and thermofuse 75 automatically control the normal temperature and safety temperature, respectively, used by heater 76.

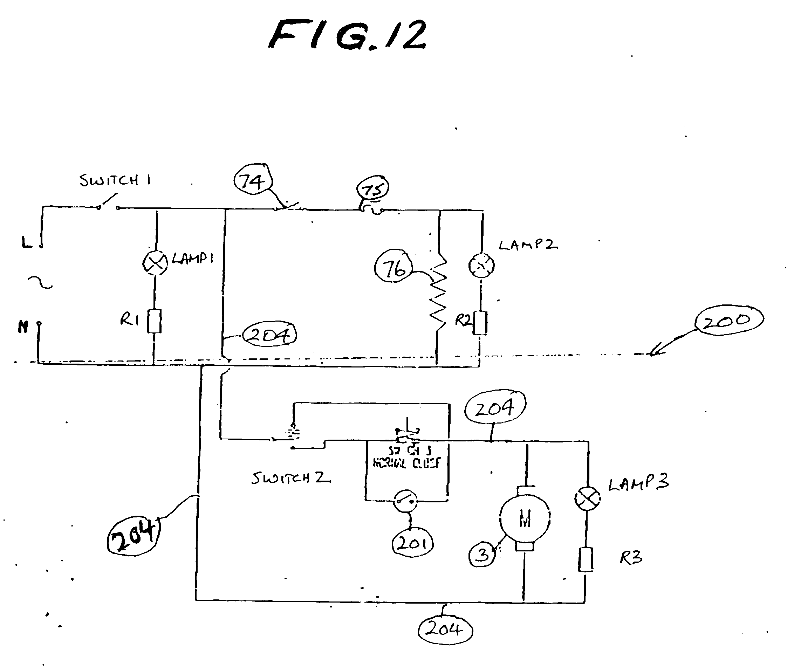

Referring to Figure 12, an alternate embodiment is shown for the circuit 100 illustrated in Figure 11. The alternate circuit 200 allows the food basket 12 to cycle between the upper and lower positions continuously. The user turns the knob of switch 2 clockwise and turns the timer 201 to close the circuit 200. The motor 3 rotates as indicated by a lamp 3. As the motor 3 rotates, the cam 4 also rotates and the lever 7 swings about the lever point A. As mentioned above, cam 4 continuously rotates and the lever 7 also sways to the left and to the right, alternatively. This motion pushes pin 8 to move to the left and to the right. The transmission 9 moves to the left and to the right so as to rotate the transmission wires 11a, 11b clockwise and counter-clockwise. As a result, the food basket 12 is raised up and moved down continuously. As the food basket 12 rises up and moves down, the food inside food basket 12 can be fried intermittently. When the timer 201 stops, the circuit 200 of the elevator switch 6 is still closed until the food basket 12 rises up to its highest position and completes the circuit of the elevator switch 6. Motor 3 stops and the food basket 12 is located at its highest position so that food can be extracted preparatory to another frying cycle.

As aforementioned, the movement of the food basket 12 is indicated by lamp 3. The constant cycling of the food basket 12 causes food to fry intermittently during the timed cycle. This intermittency and the horizontal immersion of the food basket allow the food to drain periodically, thus providing a fried product that, on average, comprises less retained cooking oil, and which is more uniformly fried. The food is less greasy and tends to have a more uniform cooking appearance and uniform taste throughout. Comparative tests with other commercial fryers were conducted in order to measure the amount of retained cooking oil. It was shown that this invention produced fried foods that were consistently lighter in weight than were foods fried in other fryers that did not horizontally immerse the food into the oil. This proved that less oil was retained in the final product. Test results illustrating the retained oil are shown in Column D of Table 1, below.

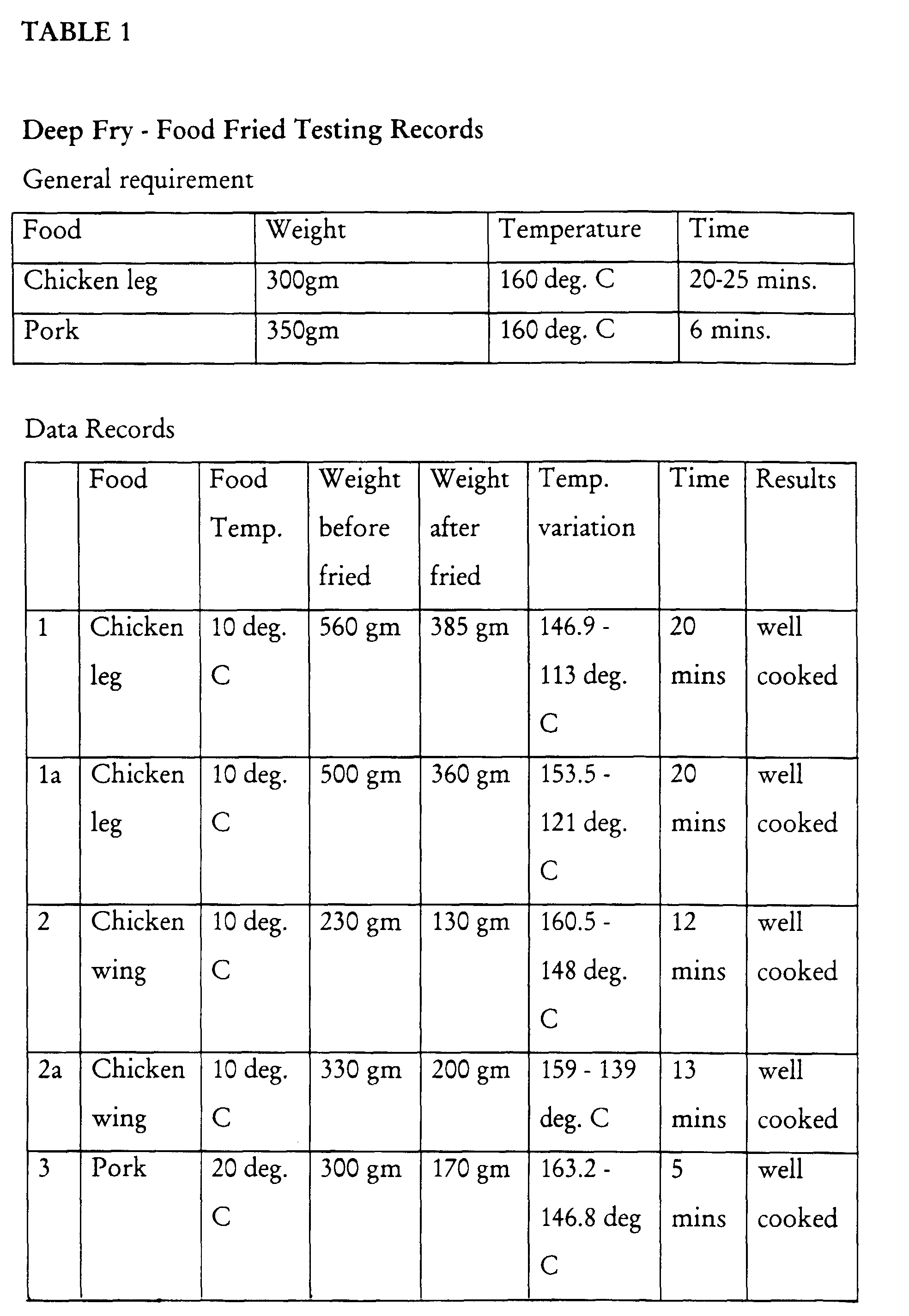

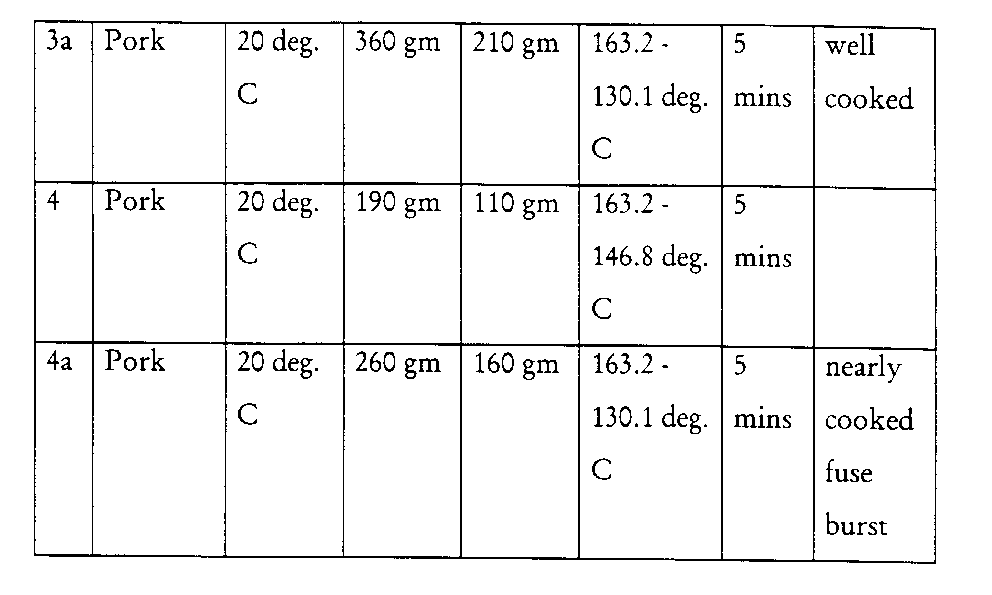

It will be observed that the foods fried by competitive fryers, designated la, 2a, 3a and 4a respectively, weighed many grams more than those foods fried by the inventive apparatus. Thus, the competitively fried food retained greater amounts of cooking oil.

In addition, the timer 201 can be used to control the food basket 12 to rise up and move down after continuously frying the food. When the circuit 204 to the timer 201 is closed, the food basket 12 moves down to its lowest position and stops to allow for continuous frying. As the time of frying is completed, the circuit 204 to the timer 201 is opened. The food basket 12 is raised to its highest point and stopped at that position for food extraction.

## Claims

1. A frying appliance that comprises a food basket that is movable between an upper, non-immersed, oil bowl position and a lower, immersed, oil bowl position, said frying appliance comprising a movable food basket and a stationary oil bowl disposed adjacent said food basket, said oil bowl having means for receiving and heating oil for frying food disposed in said food basket; a translational mechanism connected to said food basket for moving said food basket between an upper, non-immersed, oil bowl position to a lower, immersed, oil bowl position, wherein said foods disposed in said food basket are cooked in heated oil disposed in said oil bowl, **characterised in that** said translational mechanism allows said food basket to remain substantially horizontal during said movement between its upper and lower positions; and drive means operatively connected to said translational mechanism for driving said translational mechanism between said upper, non-immersed, oil bowl position to said lower, immersed, oil bowl position.

2. The frying appliance in accordance with claim 1 characterised in that said translational mechanism comprises two substantially parallel links pivotally connected to said food basket and pivotally disposed with respect to said housing.

3. The frying appliance in accordance with claim 2 characterised in that said drive means comprises a gear train and worm mechanism for causing said two, substantially parallel links to pivot with respect to said housing, causing said basket to move relative thereto.

4. The frying appliance in accordance with claim 3 characterised in that said drive means further comprises a drive motor operatively connected to said gear train for rotatively driving said gear train.

5. The frying appliance in accordance with claim 2 characterised in that said drive means comprises a shaft for causing said two, substantially parallel links to pivot with respect to said housing, causing said food basket to move relative thereto.

6. The frying appliance in accordance with claim 5 characterised in that said drive means further comprises a drive motor operatively connected to said shaft for rotatively driving said shaft.

7. The frying appliance in accordance with any preceding claim characterised in that said drive means further comprises a switch, a rotative cam that is rotatable by said drive means, and an electrical circuit for powering said drive motor, said cam actuating said switch to control said electrical circuit in order to feed power to said drive motor.

8. The frying appliance in accordance with any preceding claim characterised in that said drive means is disposed in an offset position with respect to said oil bowl.

9. The frying appliance in accordance with any preceding claim characterised in that said drive means is insulatively separated from said oil bowl.

10. The frying appliance in accordance with claim 7 characterised in that said electrical circuit further comprises a timer switch that feeds power to said drive means continuously, whereby said food basket cycles in and out of said oil bowl continuously for a predetermined time.

11. A frying appliance as claimed in any preceding claim characterised in that the movable food basket for receiving items to be fried is supported in a housing.

12. The frying appliance as claimed in any preceding claim further characterised by a frame for supporting said oil bowl.

13. The frying appliance as claimed in claim 8 characterised in that the food basket automatically cycles in and out of said oil bowl continuously for a predetermined time.

14. The frying appliance as claimed in claim 12 or claim 13 characterised in that the frame also supports the translational mechanism, which is pivotally connected to said food basket and pivotally anchored to said frame.

15. The frying appliance as claimed in claim 7 characterised in that when said timer switch is closed, the food basket is lowered to said lower oil pan position.

16. The frying appliance as claimed in claim 7 characterised in that when said timer switch is open, said food basket is raised to said upper oil pan position.

17. An intermittent frying appliance comprising a food basket that uniformly fries food, and which contains less cooking oil, as it automatically moves between an upper, non-immersed, oil bowl position and a lower, immersed, oil bowl position, said frying appliance comprising a housing supporting a movable food basket and a stationary oil bowl disposed adjacent said food basket, said oil bowl having means for receiving and heating oil for intermittently frying food disposed in said food basket, a support mechanism connected to said food basket for moving said food basket between an upper, non-immersed, oil bowl position to a lower, immersed, oil bowl position, said foods disposed in said food basket are uniformly cooked in heated oil disposed in said oil bowl by reason of said support mechanism allowing said food basket to remain substantially horizontal during said movement between said upper, non-immersed oil bowl position, and said lower, immersed oil bowl position, and drive means operatively connected to said support mechanism for automatically driving said support mechanism between said upper, non-immersed, oil bowl position to said lower, immersed, oil bowl position, said food being uniformly and intermittently fried to provide a food product that retains less oil.

18. A uniform frying appliance that comprises a frying basket that uniformly fries food, and which contains less cooking oil, as it automatically moves between an upper, non-immersed, oil bowl position and a lower, immersed, oil bowl position, said frying appliance comprising a housing supporting a movable food basket and a stationary oil bowl disposed adjacent said food basket, said oil bowl having means for receiving and heating oil for uniformly frying food disposed in said food basket, a support mechanism connected to said frying basket for uniformly moving said food basket between an upper, non-immersed, oil bowl position to a lower, immersed, oil bowl position, said foods disposed in said food basket are uniformly cooked in heated oil disposed in said oil bowl by reason of said support mechanism allowing said food basket to remain substantially horizontal during said movement between said upper, non-immersed oil bowl position, and said lower, immersed oil bowl position, and a drive means operatively connected to said support mechanism for driving said support mechanism between said upper, non-immersed, oil bowl position to said lower, immersed, oil bowl position, said food being uniformly fried to provide a food product that retains less oil.
